# EUROPEAN PATENT APPLICATION

(11) **EP 4 749 258 A1**
(43) Date of publication of application: **27.05.2026**
(21) Application number: 24306974.7
(22) Date of filing: 26.11.2024
(51) Int. Cl.: G01M 3/00, G01M 3/20, G01M 3/38, G06V 20/10, B64U 101/30

(54) **LEAK RECORDATION SYSTEMS AND METHODS**

(71) Applicant: Technip Energies France, 92741 Nanterre Cedex (FR)
(72) Inventor: MOLLET, Celine, 92741 Nanterre Cedex (FR); DOISNEAU, Bertrand, 92741 Nanterre Cedex (FR)
(74) Representative: Edson, Russell Gregory

(57) **Abstract**

A leak recordation system can be used to automatically monitor gaseous emissions in an industrial plant. The leak recordation system can include a leak detection unit with a detector and a transmitter. The detector can quantify a leak from a leaking element of an industrial plant. The transmitter can output location data related to the leak. The leak recordation system additionally can include a computing device that can use the location data to determine an identifier that maps to an identity of the leaking element such that the leaking element is identifiable in a database system. The computing device then can use the identity of the leaking element and the database system to determine one or more parameters of the leak, such as a quantification of the leak. The computing device can record the quantification of the leak and can generate a cumulative leak quantification related to the industrial plant.

## Description

### Technical Field

The present disclosure relates generally to leak recordation systems and methods, such as leak recordation systems and methods that monitors gaseous emissions in an industrial plant.

### Background

An industrial plant can include one or more pieces of equipment for industrial production, processing, and/or output, such as chemical or fuel production. In some cases, the pieces of equipment may store, transport, or otherwise handle gaseous materials. During operation, the pieces of equipment may generate unintentional and undesirable emissions or leakage of the gaseous materials, which are also referred to as fugitive emissions. Typical fugitive emissions are small and difficult to detect. It is desirable to monitor and quantify the fugitive emissions released into the atmosphere via industrial plants.

### Summary

According to aspects of the present disclosure, a gas leak recordation system, a method, and a non-transitory computer-readable medium are provided according to one or more of the following examples. As used below, any reference to a series of examples is to be understood as a reference to each of those examples disjunctively (e.g., "Examples 1-4" is to be understood as "Examples 1, 2, 3, or 4").

Example 1 is a gas leak recordation system comprising: (a) a gas leak detection unit, the gas leak detection unit comprising a detector and a transmitter, the detector configured to quantify a leak from a leaking element, wherein the leaking element is one of a plurality of fluid handling elements of an industrial plant, the transmitter configured to output location data related to the leak; and (b) a database system storing configuration data related to the plurality of fluid handling elements, the configuration data comprising a respective fluid composition handled by each fluid handling element; (c) a computing device in communication with the gas leak detection unit and the database system, the computing device comprising: (i) a processor; and (ii) a non-transitory computer-readable medium having instructions stored thereon that are executable by the processor to cause the computing device to: using the location data related to the leak, determine an identifier that maps to an identity of the leaking element such that the leaking element is identifiable in the database system; using at least the identity of the leaking element and the database system, determining one or more parameters of the leak associated with the leaking element, the one or more parameters comprising a quantification of the leak; record the quantification of the leak associated with the leaking element; and generate a cumulative leak quantification related to the industrial plant, the cumulative leak quantification comprising the quantification of the leak.

Example 2 is the gas leak recordation system of example(s) 1, wherein the non-transitory computer-readable medium further includes instructions executable by the processor for causing the processor to: generate an emissions value associated with the leaking element prior to deploying the gas leak detection unit, wherein the emissions value is an initial quantification of gaseous emissions released by the leaking element that is determined using a first emissions factor; record the emissions value in an emissions database that stores a plurality of entries that quantifies emissions released by the plurality of fluid handling elements of the industrial plant, wherein the emissions value is identifiable in the emissions database using the identifier associated with the leaking element; subsequent to quantifying the leak, generate an updated emissions value using a second emissions factor selected based at least on the leak of the leaking element or using the quantification of the leak; and record the updated emissions value in the emissions database as an updated quantification of the gaseous emissions released by the leaking element.

Example 3 is the gas leak recordation system of example(s) 1-2, wherein the gas leak detection unit is an unmanned device configured to be deployed to monitor at least a portion of the plurality of fluid handling elements of the industrial plant.

Example 4 is the gas leak recordation system of example(s) 1-3, wherein the gas leak detection unit is configured to: determine the location data related to the leak based on a physical location of the gas leak detection unit when detecting the leak; and transmit the location data to the computing device.

Example 5 is the gas leak recordation system of example(s) 1-4, wherein the unmanned device is configured to be deployed using a predefined flight plan or remote operation by an operator, and wherein the predefined flight plan comprises one or more waypoints at which the unmanned device is configured to obtain imaging data related to at least one of the plurality of fluid handling elements.

Example 6 is the gas leak recordation system of example(s) 1-5, wherein the unmanned device is configured to automatically determine at least a portion of the predefined flight plan based on historical data related to one or more historical flight plans or related to a set of historical leaking elements of the plurality of fluid handling elements.

Example 7 is the gas leak recordation system of example(s) 1-6, wherein the detector of the gas leak detection unit comprises an imaging device configured to obtain imaging data usable to detect the leak.

Example 8 is the gas leak recordation system of example(s) 1-7, wherein the computing device further comprises an image processing module to: receive imaging data from the gas leak detection unit; extract characteristics from the imaging data to generate classification data related to the leak, wherein the classification data comprises information related to one or more chemicals in the leak; and using the classification data, determine at least one parameter of the one or more parameters, wherein the at least one parameter comprises a chemical composition of the leak of the leaking element or a flow rate of the leak.

Example 9 is a method comprising: receiving location data from a transmitter of a gas leak detection unit comprising a detector that has detected a leak from a leaking element, the leaking element being one of a plurality of fluid handling elements of an industrial plant; using the location data related to the leak, determining an identifier that maps to an identity of the leaking element such that the leaking element is identifiable in a database system, the database system storing configuration data related to the plurality of fluid handling elements and comprising a respective fluid composition handled by each fluid handling element; using the identity of the leaking element and the database system, determining one or more parameters of the leak associated with the leaking element, the one or more parameters comprising a quantification of the leak; recording the quantification of the leak associated with the leaking element; and generating a cumulative leak quantification related to the industrial plant, the cumulative leak quantification comprising the quantification of the leak.

Example 10 is the method of example(s) 9, further comprising: generating an emissions value associated with the leaking element prior to deploying the gas leak detection unit, wherein the emissions value is an initial quantification of gaseous emissions released by the leaking element that is determined using a first emissions factor; recording the emissions value in an emissions database that stores a plurality of entries that quantifies emissions released by the plurality of fluid handling elements of the industrial plant, wherein the emissions value is identifiable in the emissions database using the identifier associated with the leaking element; subsequent to quantifying the leak, generating an updated emissions value using a second emissions factor selected based at least on the leak of the leaking element or using the quantification of the leak; and recording the updated emissions value in the emissions database as an updated quantification of the gaseous emissions released by the leaking element.

Example 11 is the method of example(s) 9-10, wherein the gas leak detection unit is an unmanned device deployed to monitor at least a portion of the plurality of fluid handling elements of the industrial plant.

Example 12 is the method of example(s) 9-11, wherein the gas leak detection unit determines the location data related to the leak based on a physical location of the gas leak detection unit when detecting the leak.

Example 13 is the method of example(s) 9-12, wherein detecting the leak of the leaking element comprises: deploying the unmanned device using a predefined flight plan or remote operation by an operator, wherein the predefined flight plan comprises one or more waypoints at which the unmanned device obtains imaging data related to at least one of the plurality of fluid handling elements.

Example 14 is the method of example(s) 9-13, wherein the unmanned device automatically determines at least a portion of the predefined flight plan based on historical data related to one or more historical flight plans or related to a set of historical leaking elements of the plurality of fluid handling elements.

Example 15 is the method of example(s) 9-14, wherein the detector of the gas leak detection unit comprises an imaging device that obtains imaging data usable to detect the leak.

Example 16 is the method of example(s) 9-15, further comprising: receiving imaging data from the gas leak detection unit; extracting characteristics from the imaging data to generate classification data related to the leak, wherein the classification data comprises information related to one or more chemicals in the leak; and using the classification data, determining a chemical composition of the leak of the leaking element.

Example 17 is a non-transitory computer-readable medium comprising instructions that are executable by a processor for causing the processor to perform operations comprising: receiving location data from a transmitter of a gas leak detection unit comprising a detector that has detected a leak from a leaking element, the leaking element being one of a plurality of fluid handling elements of an industrial plant; using the location data related to the leak, determining an identifier that maps to an identity of the leaking element such that the leaking element is identifiable in a database system, the database system storing configuration data related to the plurality of fluid handling elements and comprising a respective fluid composition handled by each fluid handling element; using the identity of the leaking element and the database system, determining one or more parameters of the leak associated with the leaking element, the one or more parameters comprising a quantification of the leak; recording the quantification of the leak associated with the leaking element; and generating a cumulative leak quantification related to the industrial plant, the cumulative leak quantification comprising the quantification of the leak.

Example 18 is the non-transitory computer-readable medium of example(s) 17, wherein the operations further comprise: generate an emissions value associated with the leaking element prior to deploying the gas leak detection unit, wherein the emissions value is an initial quantification of gaseous emissions released by the leaking element that is determined using a first emissions factor; record the emissions value in an emissions database that stores a plurality of entries that quantifies emissions released by the plurality of fluid handling elements of the industrial plant, wherein the emissions value is identifiable in the emissions database using the identifier associated with the leaking element; subsequent to quantifying the leak, generate an updated emissions value using a second emissions factor selected based at least on the leak of the leaking element or using the quantification of the leak; and record the updated emissions value in the emissions database as an updated quantification of the gaseous emissions released by the leaking element.

Example 19 is the non-transitory computer-readable medium of example(s) 17-18, wherein the gas leak detection unit is an unmanned device deployed to monitor at least a portion of the plurality of fluid handling elements of the industrial plant.

Example 20 is the non-transitory computer-readable medium of example(s) 17-19, wherein the unmanned device is deployed using a predefined flight plan or remote operation by an operator, and wherein the predefined flight plan comprises one or more waypoints at which the unmanned device obtains imaging data related to at least one of the plurality of fluid handling elements.

This summary is not intended to identify key or essential features of the claimed subject matter, nor is it intended to be used in isolation to determine the scope of the claimed subject matter. The subject matter should be understood by reference to appropriate portions of the specification, any of the drawings, and the claims.

The foregoing, together with other features and examples, will become more apparent upon referring to the following specification, claims, and accompanying drawings.

### Brief Description of the Drawings

FIG. 1 is a block diagram of an industrial plant according to some examples of the present disclosure.
FIG. 2 is a block diagram of a leak recordation system that monitors gaseous emissions in an industrial plant according to some examples of the present disclosure.
FIG. 3 is a schematic of an example unmanned aerial device that monitors gaseous emissions in an industrial plant according to some examples of the present disclosure.
FIG. 4 is a schematic of an example flight plan implemented by a leak detection unit to monitor gaseous emissions in an industrial plant according to some examples of the present disclosure.
FIG. 5 is an example table including emissions values used to monitor gaseous emissions in an industrial plant according to some examples of the present disclosure.
FIG. 6 is a block diagram of an example computing device used to automatically monitor gaseous emissions in an industrial plant according to some examples of the present disclosure.
FIG. 7 is a flowchart of a process for automatically monitoring gaseous emissions in an industrial plant according to some examples of the present disclosure.

### Detailed Description

Certain aspects and examples of the present disclosure relate to leak recordation systems and methods for monitoring leaks from leaking elements of fluid handling elements of fluid handling elements of an industrial plant. The leaks can be unintentional gaseous emissions from a piece of equipment into a surrounding environment, such as due to a leak in the piece of equipment. In some cases, these gaseous emissions can be considered fugitive emissions, such as when the gaseous emissions are not caught by a capture system of the industrial plant. The leak recordation system can include a gas leak detection unit to detect the leak in the piece of equipment, identify the piece of equipment associated with the leak, and/or determine a chemical composition of the leak. Specifically, the leak recordation system may include a gas leak detection unit that can automatically or semi-automatically monitor one or more pieces of equipment of the industrial plant to detect leaks and obtain data corresponding to the detected leaks. Additionally, the leak recordation system can maintain a record of emissions data corresponding to one or more pieces of equipment in the industrial plant to monitor quantities of emissions emitted by the industrial plant over time. The quantities of the emissions can be estimated or calculated using emissions factors that can vary based on whether a leak has been detected in a particular piece of equipment.

The gaseous emissions can include gases that are difficult to visually detect by the human eye and may be present in relatively small quantities that can be difficult to accurately detect or distinguish without suitable equipment. For example, greenhouse gases such as carbon dioxide and methane are colorless and can be difficult to manually detect without suitable equipment. By using the leak recordation system described herein, the number of personnel required and personnel time can be minimized with respect to monitoring the gaseous emissions of the industrial plant. Instead of having multiple personnel manually monitoring the pieces of equipment in the industrial plant for potential leaks, the gas leak detection unit of the leak recordation system can minimize human intervention and automate the detection process. By automating and facilitating the detection process, the pieces of equipment may be monitored more frequently than manual detection processes to increase a likelihood of leaks being detected and resolved timely, thereby reducing emissions or otherwise enhancing the ability to address those emissions. Additionally, the leak recordation system described herein may facilitate more accurate quantifications of emissions that would be difficult to achieve with manual detection.

The gas leak detection unit can also reduce safety hazards by enabling an operator to deploy the gas leak detection unit remotely with respect to the pieces of equipment, thereby minimizing the operator's exposure to the gaseous emissions that may include hazardous chemicals. Additionally, remote operation of the gas leak detection unit can be used to monitor certain pieces of equipment that may be positioned at places that are difficult for the operator to reach or remain safely to take a manual measurement. For example, the gas leak detection unit can include one or more sensors or detectors that can detect the gaseous emissions from a distance, rather than having to be held or otherwise positioned by the operator proximate to a particular piece of equipment. Additionally, the gas leak detection unit may enable more frequent monitoring to perform actions to timely address the leak, such as through repair or replacement of a leaking piece of equipment.

In some examples, the leak recordation system includes a computing device in communication with the gas leak detection unit. The gas leak detection unit may be an unmanned device, such as a drone, that may operate with minimal human intervention (e.g. by executing a predefined flight plan) to implement leak detection or monitor at least a portion of the fluid handling elements. The unmanned device can perform its monitoring or leak detection operations without a human operator accompanying or physically operating the unmanned device. The gas leak detection unit can be an unmanned aerial device, unmanned land device, or unmanned maritime device. From the gas leak detection unit, the computing device can receive data related to a leak identified by the gas leak detection unit. The data can include location data related to where the leak is occurring in the industrial plant such that the computing device can identify a corresponding leaking element associated with the leak. Additionally, the data provided by the gas leak detection unit can include sensor data that the computing device can use to determine one or more characteristics or parameters of the leak, such as a type or a chemical composition of the leak. In some examples, the gas leak detection unit may analyze the sensor data to determine the characteristics or parameters of the leak before transmitting the characteristics or the parameters to the computing device.

Using the data from the gas leak detection unit, the computing device can quantify the leak, such as in terms of an amount or mass of pollutants released in the leak. The computing device then can record the quantification of the leak in an emissions database for recordkeeping or further analysis. In some cases, one or more remediation actions may be implemented based on emissions released by the leaking element or by the industrial plant as a whole. For instance, the leaking element may undergo repair or replacement after the gas leak detection unit detects the leak. The computing device may periodically receive updated data from the gas leak detection unit such that the computing device can generate updated quantifications of the leak or other emissions based on the updated data. The computing device then can update the emissions database accordingly.

Illustrative examples follow and are given to introduce the reader to the general subject matter discussed herein and are not intended to limit the scope of the disclosed concepts. The following sections describe various additional features and examples with reference to the drawings in which like numerals indicate like elements, and directional descriptions are used to describe the illustrative aspects, but, like the illustrative aspects, should not be used to limit the present disclosure.

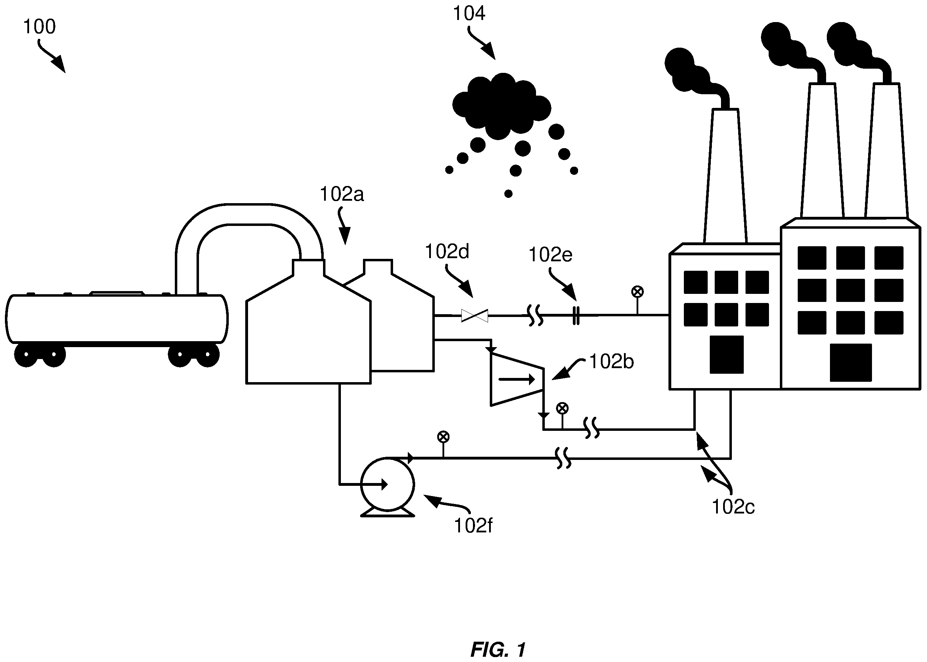

FIG. 1 is a block diagram of an industrial plant 100 according to some examples of the present disclosure. The industrial plant 100 can include necessary infrastructure to operate and maintain a facility for industrial processes. The infrastructure of the industrial plant 100 can include one or more pieces of equipment 102 that assist with the industrial processes, such as through transportation, storage, communication, etc. For example, the industrial plant 100 can be a chemical plant used to produce one or more chemicals. As another example, the industrial plant 100 can be an oil refinery where crude oil is refined into one or more petroleum products or petrochemicals. Non-limiting examples of the pieces of equipment 102 include tanks 102a, connectors, sampling connections, pressure relief devices, compressors 102b, caps, plugs, gaskets, pipes 102c, valves 102d, flanges 102e, separators, reactors or other suitable reaction vessels, or pumps 102f. In some cases, the industrial plant 100 may also be referred to as a physical plant or a mechanical plant.

In some examples, to perform the industrial processes, the pieces of equipment 102 may handle, transport, contact, or otherwise interact with one or more fluids (e.g., gases or liquids). These pieces of equipment can be referred to as fluid handling elements. As shown in FIG. 1, the industrial plant 100 may include one or more fluid handling elements, such as a tank 102a that can store fluids and a flange 102e that can join piping and process equipment. In some examples, the fluid handling elements may leak or otherwise release gaseous emissions 104, such as due to a deterioration of a sealing element (e.g., a gasket). The gaseous emissions 104 can include one or more chemicals. Examples of the gaseous emissions 104 may include greenhouse gases (e.g., methane or carbon dioxide), refrigerants, fluorine-containing compounds, volatile organic compounds, or a combination thereof.

In some implementations, the leak may be defined based on a predefined threshold with respect to a quantity of the emissions 104 that are unintentionally released or a leakage rate at which the emissions 104 are released. In other words, some pieces of equipment with emissions below the predefined threshold may be considered to be functioning normally, whereas other pieces of equipment with emissions above the predefined threshold may be considered to be leaking. The predefined threshold can also be referred to as a leak definition. The predefined threshold can vary based on a type of equipment, monitoring frequency, or a type of fluid in contact with the fluid handling elements 204. In some examples, the predefined threshold can be defined by a rule-setting organization, such as an environmental regulation agency.

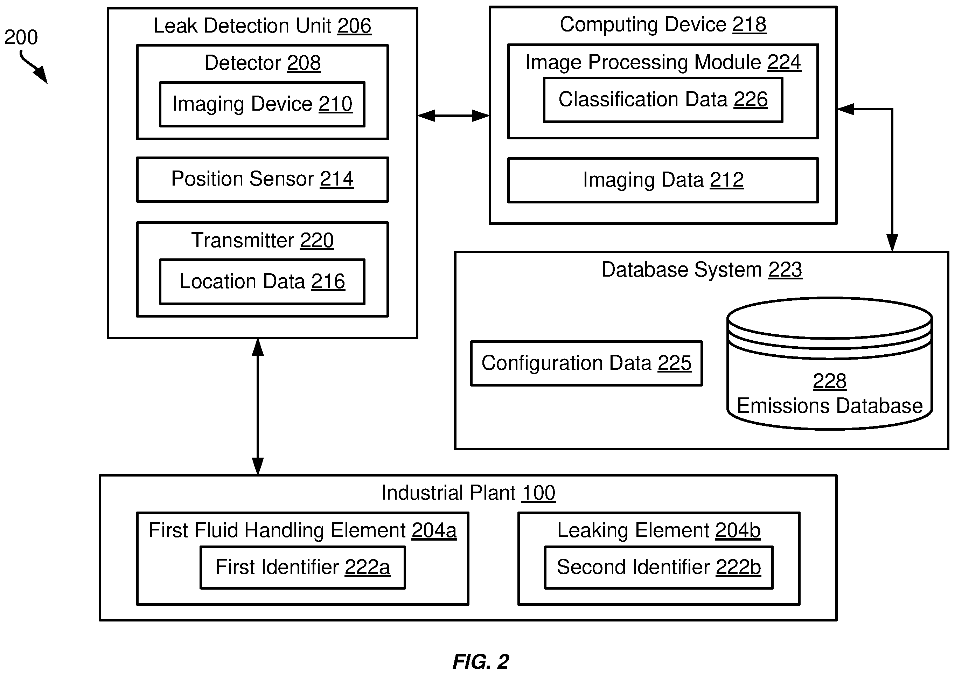

FIG. 2 is a block diagram of a leak recordation system 200 that monitors gaseous emissions in an industrial plant (e.g., the industrial plant 100 of FIG. 1) according to some examples of the present disclosure. As described herein, the gaseous emissions can be fugitive emissions released by one or more fluid handling elements 204. A first fluid handling element 204a can be a piece of equipment that is functioning normally, such as without leakage. A leaking element 204b can be a second fluid handling element that has a leak such that gaseous emissions (e.g., fugitive emissions) are unintentionally released via the leaking element 204b.

In the example of FIG. 2, the leak recordation system 200 includes a leak detection unit 206 to monitor the fluid handling elements 204 of the industrial plant. The leak detection unit 206 can also be referred to as a gas leak detection unit. The leak detection unit 206 may be deployed at predefined intervals or regular intervals for leak detection with respect to the fluid handling elements 204, or may only be deployed irregularly. In some instances, the leak detection unit 206 may be deployed continuously or at periodic intervals, such as hourly, daily, weekly, monthly, quarterly, or yearly, or irregularly, to monitor at least a portion of the fluid handling elements 204. In some cases, the leak detection unit 206 can monitor a portion or subset of the fluid handling elements 204 more frequently than a remaining portion of the fluid handling elements 204. For instance, the monitoring frequency of the leak detection unit 206 may vary depending on a type of equipment for each fluid handling element. Additionally or alternatively, the leak detection unit 206 can monitor fluid handling elements that have previously been identified as leaking more frequently than fluid handling elements that have not been previously identified as leaking, such as to monitor whether the leak is worsening. For example, a remedial action (e.g., repair or replacement of the leaking element 204b) to address the leak may be prioritized if a rate at which the emissions are released via the leaking element 204b increases. As another example, the leak detection unit 206 may monitor the leaking element 204b more frequently than a typical monitoring frequency after repair of the leaking element 204b to ensure that the leak has not occurred again.

To monitor the fluid handling elements 204 with respect to leak detection, the leak detection unit 206 can include a detector 208 that can detect whether the fluid handling elements 204 have a leak (e.g. abnormal and/or uncontrolled emissions). In some examples, the leak detection performed by the leak detection unit 206 can involve capturing suitable data (e.g., imaging data 212) using the detector 208 and transmitting the suitable data to a computing device (e.g., the computing device 218 described below) to process the suitable data. The computing device can process or analyze the data received from the leak detection unit 206 to determine whether the data correlates to a leak of a fluid handling element 204.

Additionally or alternatively, the detector 208 can use analytical techniques, such as optical spectroscopy, optical gas imaging, or laser absorption spectroscopy, to determine a concentration or amount of a chemical in gas phase. Additionally, the detector 208 can determine a chemical composition of the emissions released by the fluid handling elements 204.

In some examples, the detector 208 can include an imaging device 210 or another suitable sensor that can collect imaging data 212 of the fluid handling elements 204. The imaging device 210 can collect visual data or spectroscopic data (e.g., infrared radiation) as part of the imaging data 212 to identify specific chemicals in the gaseous emissions. For example, the imaging device 210 can be an infrared camera or a thermal imaging camera that can include an infrared detector to collect the spectroscopic data. Each chemical has respective absorption characteristics that can be used to identify a corresponding chemical. In some cases, the imaging data 212 can include a visualization of the leak as a gas cloud or plume.

Collecting the imaging data 212 can involve sequentially capturing one or more frames of a particular field of view that may encompass one or more pieces of equipment of the industrial plant 100. The imaging device 210 may record video of the particular field of view in addition to or instead of the frames. In some implementations, the leak detection unit 206 may capture the frames or video footage at multiple fields of view (e.g., by capturing multiple images from multiple angles) with respect to the fluid handling elements 204. In particular, some fields of view may present variations in detected parameters of a background environment of the captured images compared to a foreground of the captured images where a leak may be detected. These variations can assist with leak detection or identification. For example, a greater temperature differential between the leak in a foreground of a particular image and a background temperature of the background environment of the particular image can result in a higher signal-to-noise ratio and more accurate data. Accordingly, capturing imaging data 212 from different angles with respect to the leak can result in different background components (e.g., a wall, fence, ambient air, etc.) with different temperatures being included in the imaging data 212.

In some examples in which the detector 208 includes an imaging device 210, the leak detection unit 206 may include an optical filter that selectively transmits light of different wavelengths to the imaging device 210. The optical filter may be a bandpass filter that only allows wavelengths detectable by the imaging device 210 to pass through the filter, thereby improving the imaging device 210's image sensitivity. In some implementations, the leak detection unit 106 additionally can include a cooling unit to reduce a temperature of the detector 208, such as to -100°C or to cryogenic temperatures. This reduction in temperature of the detector 108 can reduce noise of the imaging data 212 obtained by the detector 208, improving visualization and detection of the specific chemicals.

The leak detection unit 206 additionally can include a position sensor 214 that can provide geolocation data to determine a physical location of the leak detection unit 206. The geolocation data can be generated by the position sensor 214 using location technologies, such as the Global Positioning System (GPS), to identify and track whereabouts of the leak detection unit 206. In some examples, the position sensor 214 can be a geolocation device that can be used to track the physical location of the leak detection unit 206, such as when the leak detection unit 206 is deployed in the industrial plant 100. The leak detection unit 206 may include other sensors, such as an accelerometer sensor, a gyroscope sensor, etc. The other sensors can be used in tandem with the position sensor 214 to generate the geolocation data of the leak detection unit 206.

In some cases, the geolocation data can be used to provide location data 216 related to a leak in the industrial plant 100. For example, the geolocation data can include coordinates, such as latitude-longitude coordinate pairs, to indicate whereabouts of the leak detection unit at particular points in time. The leak detection unit 206 can simultaneously collect the geolocation data and the imaging data 212 such that the geolocation data can be associated with particular frames or subsets of the imaging data 212. Based on the geolocation data and the imaging data 212, the location data 216 corresponding to the location of the leak can be determined such that the leaking element 204b can be identified. For example, a distance between the leak detection unit 206 when capturing a particular frame of the imaging data 212 and the detected leak associated with the particular frame of the imaging data 212 can be estimated or calculated. The location data 216 of the leak then can be determined using the distance and geolocation data associated with the particular frame of the imaging data 212.

In still other examples the leak detection unit may determine location data related to the leak in other ways. For instance, in some implementations, each fluid handling element 204 may have a physical tag indicating an identity of the fluid handling element 204. The imaging data 212 may include the physical tag(s) and can thus be used to determine the location data 216 corresponding to the leak. As an example, the physical tag may include a barcode representing a unique identifier of a corresponding piece of equipment.

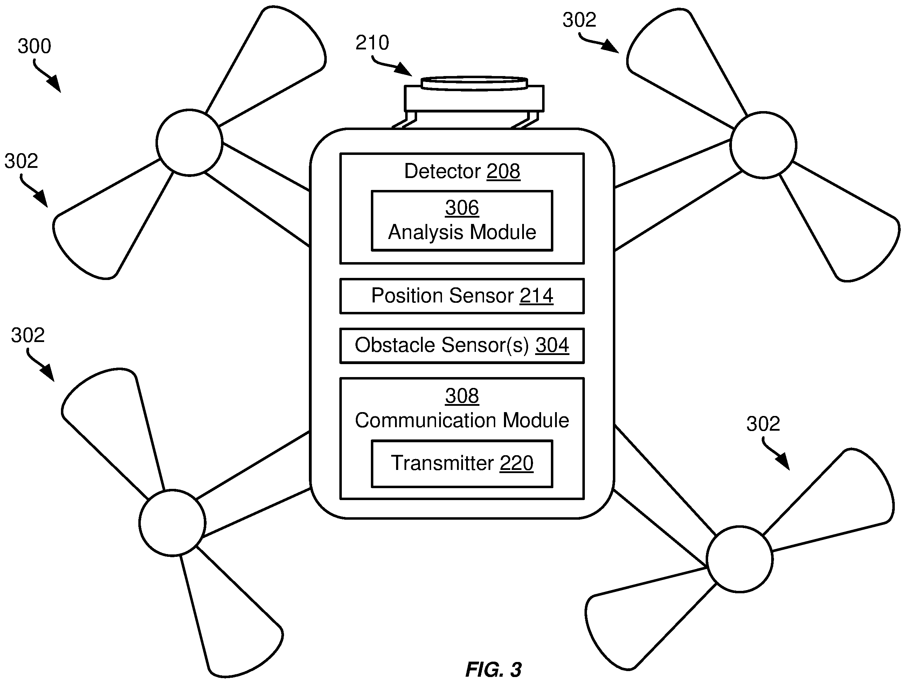

The leak detection unit 206 can be remotely operated by an operator or be fully or semi-autonomous. In some examples, the leak detection unit 206 can be an unmanned device or unmanned vehicle, such as a drone. The leak detection unit 206 may be an unmanned aerial, land, or maritime device. In general, the leak detection unit 206 can include a processor and a memory to perform one or more operations related to leak detection. The memory of the leak detection unit 206 can store instructions that the processor of the leak detection unit 206 can execute to perform the operations. Additionally, the leak detection unit 206 can include a power source (e.g., an engine) to enable movement of the leak detection unit 206, such as in response to a remote command from the operator or to execute a predefined path in the industrial plant 100. The power source can actuate another component, such as a propeller, to move the leak detection unit 206. In some cases where the unmanned device is an unmanned aerial device, the leak detection unit 206 can be deployed using a predefined flight plan with respect to a respective physical location of at least a portion of the fluid handling elements 204. FIG. 3 is a schematic of an example unmanned aerial device 300 that monitors gaseous emissions in an industrial plant (e.g., the industrial plant 100 of FIG. 1) according to some examples of the present disclosure. In some implementations, the unmanned aerial device 300 can include components described herein for the leak detection unit 206 of FIG. 2.

The unmanned aerial device 300 can include one or more hardware components or software components to enable the unmanned aerial device 300 to provide leak detection functionality. The components of the unmanned aerial device 300 can be powered using a battery, such as a lithium-ion battery. In some examples, the battery can include sensors to monitor a status or condition of the battery, such as by providing temperature data or power output data. To enable flight and movement, the unmanned aerial device 300 can include two or more propellers 302 that can rotate to generate forces to move the unmanned aerial device 300 in a particular direction. The unmanned aerial device 300 can include one or more motors (e.g., a brushless motor or a brushed motor) to power or actuate the propellers 302. In some examples, each propeller 302 can be independently controlled or actuated, such as with respect to rotation speed or direction of rotation (e.g., clockwise or counterclockwise). For example, the unmanned aerial device 300 can include an electronic speed controller that can adjust or control an amount of power provided to each motor of the unmanned aerial device 300. Changing flight direction can involve controlling the propellers 302 to modify the forces (e.g., lift or thrust) acting on the unmanned aerial device 300. As shown, the unmanned aerial device 300 includes four propellers 302 positioned approximately at each corner of a frame of the unmanned aerial device 300. In some examples, the propellers 302 can be positioned equidistance from each other. To maintain balance, a pair of two propellers can rotate in a clockwise direction while the remaining pair of two propellers can rotate in a counterclockwise direction.

In some implementations, the unmanned aerial device 300 can include one or more sensors, such as any suitable sensors that can assist with navigation, leak detection, or flight control. For example, as described herein, the unmanned aerial device 300 can include a position sensor 214, such as a global positioning system module, that can enable geolocation of the unmanned aerial device 300. In particular, the position sensor 214 can identify a physical location of the unmanned aerial device 300 based on an amount of time take for signals from global positioning satellites to reach the unmanned aerial device 300. As another example, the sensors of the unmanned aerial device 300 can include a barometer or another suitable pressure sensor. The barometer can generate pressure readings that can be used to detect an altitude of unmanned aerial device 300 with respect to sea level.

In some implementations, the unmanned aerial device 300 can include one or more obstacle sensors 304. The obstacle sensors 304 can detect a presence of an object that may be positioned within a flight path of unmanned aerial device 300. Once the object is detected, the flight path of the unmanned aerial device 300 can be adjusted to avoid a collision with the object. For example, an obstacle sensor 304 can be positioned in an undercarriage of the unmanned aerial device 300 to prevent collisions with objects below the unmanned aerial device 300. In some examples, the obstacle sensors 304 can be used to determine a location or physical position of the fluid handling elements 204, such as based on data or signals collected by the obstacle sensors 304 to detect an obstacle.

Different types of sensors can be included as the obstacle sensors 304. In some examples, the obstacle sensors 304 can include image sensors that can capture one or more images of an environment or surroundings of the unmanned aerial device 300 while moving or stationary. Based on analyzing pixels of the images captured by the image sensors, a distance from a detected object can be calculated or estimated. Additionally or alternatively, the obstacle sensors 304 can include other types of sensors, such as infrared sensors. For example, the infrared sensors may transmit infrared signals into the surroundings of the unmanned aerial device 300. The infrared sensors can detect a presence of an obstacle based on whether the infrared sensors receive reflected infrared signals. In particular, if the infrared signals transmitted by the infrared sensors encounter an obstacle, at least a portion of the infrared signals can be reflected back toward the infrared sensors as the reflected infrared signals, thereby indicating the presence of the obstacle. In some implementations, the reflected infrared signals can be used to determine or estimate a distance between the obstacle and the unmanned aerial device 300.

As described herein, the unmanned aerial device 300 can include a detector 208 to perform leak detection of gaseous emissions, such as fugitive emissions. For example, as shown in FIG. 3, the unmanned aerial device 300 includes an imaging device 210 to collect imaging data that can be used to detect or quantify a leak of a piece of equipment in an industrial plant (e.g., the industrial plant 100 of FIG. 1). As shown in FIG. 3, the imaging device 210 can be coupled to an undercarriage of the unmanned aerial device 300. It will be appreciated that the imaging device 210 may be positioned elsewhere on the unmanned aerial device 300.

In some examples, the imaging data generated by the imaging device 210 can assist with collision detection or prevention as described above. Leak detection can involve analyzing the imaging data, such as by comparing individual pixels in the imaging data to determine whether certain pixels are indicative of or relate to the leak. In some implementations, the detector 208 can include an analysis module 306 that can perform at least a portion of the analysis of the imaging data. For example, the analysis module 306 may complete the analysis of the imaging data by using image segmentation or other suitable computer vision techniques to analyze the imaging data. As another example, the analysis module 306 may perform a portion of the analysis, such as by generating spectroscopy data using the imaging data. In some examples, the unmanned aerial device 300 may lack sufficient system resources (e.g., processing power, storage, etc.) to complete the analysis of the imaging data. Accordingly, the unmanned aerial device 300 can transmit the imaging data or its analysis of the imaging data to another device to perform or complete the analysis of the imaging data.

In some examples, the unmanned aerial device 300 can include a processing device. For example, the processing device can include a flight controller that can execute one or more predefined flight plans stored in a memory or another suitable storage system available in the unmanned aerial device 300. As described herein, the predefined flight plans may involve the unmanned aerial device monitoring at least a portion of the fluid handling elements 204 of the industrial plant 100. The processing device can execute or adjust the predefined flight plans based on communication received from a remote controller or from the sensors of the unmanned aerial device 300. Additionally or alternatively, the processing device may determine at least a portion of the predefined flight plan, such as based on historical data related to one or more historical flight plants or related to a set of historical leaking elements. In some examples, the processing device may automatically determine the predefined flight plan using self-learning (e.g., artificial intelligence, machine learning, etc.). For example, the processing device can execute a machine-learning model trained using historical data, such as previously executed flight plans, to automatically determine the predefined flight plan. In some examples, the predefined flight plan determined using self-learning can include certain fluid handling elements where the most critical or frequent leaks are detected.

In some implementations, the unmanned aerial device 300 can include a communication module 308, which can be communicatively coupled with the processing device. As described herein, the communication module 308 can include a transmitter 220, such as to communicate with the remote controller of the unmanned aerial device 300. Although transmitter 220 is referred to as a transmitter, it will be appreciated that the communication module 308 can include a transmitter, a receiver, or a transceiver. For example, the transmitter 220 can be an antenna that can transmit and receive radio waves used to communicate with other devices, such as to provide a current location of the unmanned aerial device 300 to the remote controller.

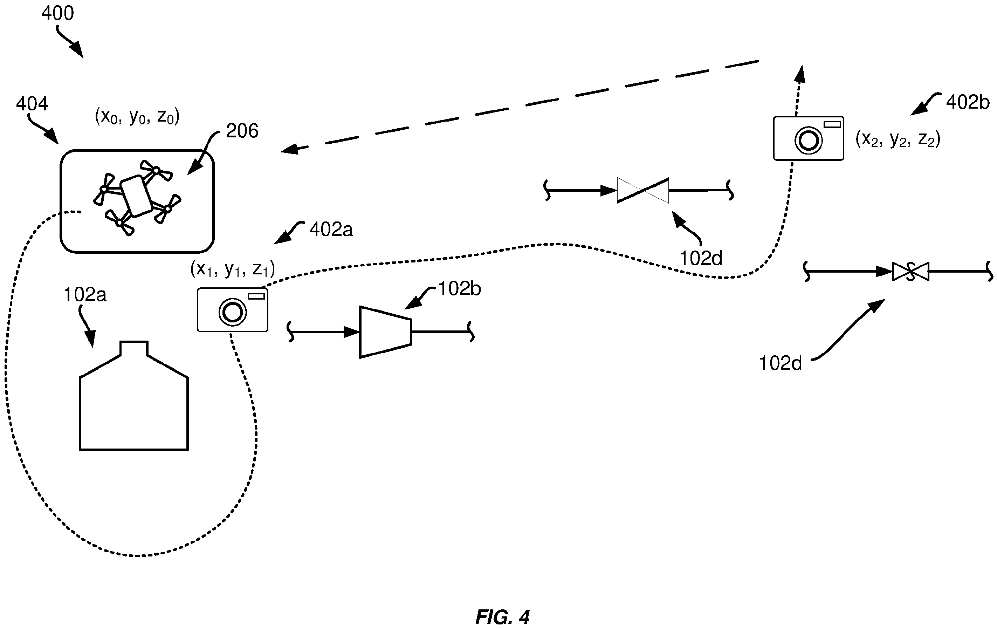

FIG. 4 shows a schematic of an example flight plan 400 implemented by a leak detection unit (e.g., the leak detection unit 206 of FIG. 2) to monitor gaseous emissions in an industrial plant according to some examples of the present disclosure. As shown in FIG. 4, the leak detection unit can be the unmanned aerial device 300 of FIG. 3. It will be appreciated that other types of leak detection units are possible.

In some examples, the predefined flight plan can include a specific flight path defined using a set of coordinates (e.g., longitudinal coordinates or latitudinal coordinates) or waypoints 402. The specific flight path can be determined such that the leak detection unit 206 can obtain the imaging data 212 to detect and analyze the leak. In some implementations, the leak detection unit 206 can remain at a docking station 404, such as to charge its battery, transfer stored data, etc., while not in use. Accordingly, the leak detection unit 206 can initiate the specific flight path from the docking station 404 and follow the set of coordinates or waypoints 402 defining the specific flight path while collecting the imaging data 212. For example, the specific flight path may include one or more waypoints 402 at which the leak detection unit 206 remains in place and has an unobstructed view of one or more pieces of equipment. As shown in FIG. 4, the specific flight path includes a first waypoint 402a and a second waypoint 402b. Each waypoint 402 can correspond to a respective set of coordinates that can indicate a physical location, an altitude, or a combination thereof. The first waypoint 402a can be selected to enable the leak detection unit 206 to capture imaging data associated with a tank 102a and a compressor 102b. For example, a field of view of an imaging device of the leak detection unit 206 can include the tank 102a and the compressor 102b when the leak detection unit 206 is positioned at the first waypoint 402a. Similarly, the second waypoint 402b can be selected such that the leak detection unit 206 can capture imaging data related to one or more valves 102d, such as butterfly valves, check valves, ball valves, pressure-relief valves, etc. For example, the waypoints 402a-b may be determined such that the leak detection unit 206 remains in suitable distance of the pieces of equipment 102 (e.g., the fluid handling elements 204) for the detector 208 to capture the imaging data 212. In some examples, the leak detection unit 206 may remain at the first waypoint 402a until the leak detection unit 206 receives a notification or command, such as from the computing device 218 of FIG. 2. For example, the leak detection unit 206 may wait at the first waypoint 402a for a notification (e.g., an acknowledgement or a receipt of information) issued by the computing device 218 to the leak detection unit 206. The notification can indicate that imaging data transmitted by the leak detection unit 206 has been received by the computing device 218. Additionally or alternatively, the computing device 218 may transmit the notification to the leak detection unit 206 after the computing device 218 records a quantification of emissions determined using the imaging data in an emissions data (e.g., the emissions database 228 of FIG. 2).

In some implementations, the leak detection unit 206 may have more than one predefined flight plan, such as different flight plans corresponding to different weather conditions or different subsections of the industrial plant 100. In some implementations, the leak detection unit 206 may have no predefined flight plan, and may be user operated or may automatically or semi-automatically determine and/or adjust its path of travel. For example, the leak detection unit 206 can automatically return to its docking station 404 after completing a predefined flight plan, such as by retracing its flight path. In some examples in which a battery level of the leak detection unit 206 is below a predefined threshold, the leak detection unit 206 may automatically or semi-automatically determine a shortest path of travel to return to the docking station 404.

Additionally, in implementations in which a predefined flight plan is used, the specific flight path can include parameters defining a particular altitude of the leak detection unit 206 at a corresponding coordinate or waypoint of the specific flight path. The predefined flight plan can be used to automatically navigate the leak detection unit 206 with or without human intervention. In some implementations, a command generated by the operator, such as via a controller associated with the leak detection unit 206, can override the predefined flight plan. For example, the operator may use the controller to instruct the leak detection unit 206 to deviate from the predefined flight plan to circumvent an unexpected obstacle. In some cases, the controller may be a computing device.

Additional parameters can be specified in the predefined flight plan of the leak detection unit 206. For example, a speed at which the leak detection unit 206 flies during the predefined flight plan can be specified. The speed of the leak detection unit 206 may vary at or during different sections of the specific flight path. In some cases, the leak detection unit 206 may be instructed to hover or remain in place at a particular location, such as to provide image or footage stability when capturing the imaging data 212. The predefined flight plan may also specify an orientation of the leak detection unit 206 at particular waypoints or coordinates of the specific flight path. The orientation of the leak detection unit 206 or components of the leak detection unit 206 may be adjustable, such as before or while the leak detection unit 206 is deployed. In particular, the leak detection unit 206 may be instructed to face or otherwise orient its components in a direction different from a heading of the leak detection unit 206 (e.g., a direction in which the leak detection unit 206 is moving). For example, the leak detection unit 206 may be moving or headed toward a northwest direction while its detector 208 is oriented in a southeast direction.

Returning to FIG. 2, the leak detection unit 206 can be communicatively coupled to or otherwise in communication (e.g., via a wireless connection) with a computing device 218. For example, the leak detection unit 206 may transmit or receive communications via a network or another suitable type of wireless connection. Examples of the wireless connection can include the Internet, IEEE 802.11, Bluetooth, or radio interfaces for accessing cellular telephone networks (e.g., transceiver/antenna for accessing a CDMA, GSM, UMTS, or another mobile communications network). In some examples, the leak detection unit 206 can include a transmitter 220 to communicate with other devices, such as the computing device 218. For example, the transmitter 220 can output one or more signals that can be received by a suitable receiver of a different device. In particular, the transmitter 220 can be configured to output location data 216 related to the leak. Additionally, the leak detection unit 206 can use the transmitter 220 to output other information (e.g., the imaging data 212) related to the leak to the computing device 218. The leak detection unit 206 additionally may include a receiver to receive communication (e.g., commands or requests) from the computing device 218 or from a separate controller.

Examples of the computing device 218 can include a desktop computer, laptop computer, server, or mobile device (e.g., a phone or a tablet). Once the computing device 218 receives the location data 216 of the leak from the leak detection unit 206, the computing device 218 can use the location data 216 to determine an identifier 222 corresponding to a piece of equipment 102 in the industrial plant 100. For example, a first identifier 222a may correspond to the first fluid handling element 204a. Similarly, a second identifier 222b may correspond to the leaking element 204b. The computing device 218 can use the location data 216 received from the leak detection unit 206 to determine which fluid handling element is leaking or discharging fugitive emissions. For example, using the location data 216 related to the leak, the computing device 218 can determine that the second identifier 222b corresponds to the leak. The computing device 218 then can map the second identifier 222b to an identity of the leaking element 204b in the industrial plant 100.

In some cases, the computing device 218 can be in communication with a database system 223 that can store configuration data 225 related to the fluid handling elements 204. The database system 223 can include one or more databases or other suitable data repositories. In some examples, the database system 223 can include information related to certain fluid handling elements of the industrial plant 100 that potentially have a leak. For example, certain fluid handling elements with a likelihood of having a leak above a predefined threshold may be tagged or otherwise associated with a potential leak identifier. In some implementations the likelihood of leakage can be determined based on time from installation, time from last repair or maintenance, material(s) of the fluid handling element 204, fluid composition that the fluid handling element 204 contacts, etc. In some implementations, the database system 223 can include a respective mapping relating each fluid handling element or a subset of the fluid handling elements 204 to a respective predetermined location. For example, the subset of the fluid handling elements 204 can include certain fluid handling elements associated with the potential leak identifier.

For example, the computing device 218 can access a piping and instrumentation diagram (P&ID) or a process flow diagram that can be part of the database system 223. The P&ID can include information related to the pieces of equipment in the industrial plant 100, such as process equipment, instrumentation, control devices, or a combination thereof. Each piece of equipment represented in the P&ID may have a corresponding identifier (e.g., the first identifier 222a or the second identifier 222b). The P&ID may be part of software that can model or indicate plant operations. For example, the P&ID can provide configuration data 225 related to inputs or outputs of a particular piece of equipment, such as fluid composition, flow rate, temperature, pressure, etc. In other words, the database system 223 can store configuration data 225 that includes a respective fluid composition handled by each fluid handling element.

In some examples, the P&ID may also include information related to a respective physical location of the fluid handling elements 204. Accordingly, using the location data 216 related to the leak, the computing device 218 can determine a corresponding identifier mapping to a particular fluid handling element with the leak. Additionally or alternatively, the computing device 218 may access other repositories of the database system 223, such as an equipment log or a site diagram of the industrial plant 100, to determine or confirm the corresponding identifier based on the location data 216 of the leak. The P&ID or other repositories can be updated over time, such as when new or replacement pieces of equipment are implemented in the industrial plant 100 or when certain pieces of equipment are removed, such as for servicing or maintenance.

Using the identity of the leaking element 204b, the computing device 218 can quantify the leak associated with the leaking element 204b. In some examples, the computing device 218 can quantify the leak at least in part using the location data 216. As discussed above, the computing device 218 can determine the respective identifier 222 of each fluid handling element 204 using the location data 216, thereby determining a respective identity of each fluid handling element 204. Using the identities of the fluid handling elements 204, the computing device 218 obtain physical parameters (e.g., flow rate, temperature, pressure, etc.) of a fluid flowing through or otherwise associated with the fluid handling elements 204. For example, the computing device 218 can communicate with the database system 223 to retrieve the physical parameters from the database system 223. The computing device 218 then can use the physical parameters to quantify the leak.

In some examples, the computing device 218 may use additional data to quantify or otherwise characterize the leak. For example, the computing device 218 may receive the imaging data 212 from the leak detection unit 206 and use the imaging data 212 to determine the chemical composition of the leak. In some cases, quantification of the leak can involve determining (e.g., calculating or estimating) a respective amount of emissions associated with each chemical of the leak. Additionally or alternatively, the quantification of the leak may be performed with respect to a group of chemicals. For example, a respective quantification of volatile organic compounds (e.g., benzene, formaldehyde, etc.) may be provided as an aggregated value. Once the leak is quantified, the leak can be attributed to the leaking element 204b when quantifying the emissions of the fluid handling elements 204. In some examples, the computing device 218 can include an image processing module 224 that can analyze the imaging data 212 related to the leak, such as to determine the chemical composition of the leak or to quantify the leak.

In some examples, the image processing module 224 can implement artificial intelligence or machine learning to analyze the imaging data 212. Accordingly, the image processing module 224 can be trained using training data that can include historical imaging data, such as imaging data previously collected by the leak detection unit 206 or other suitable devices. The image processing module 224 can be trained in a supervised, unsupervised, or semi-supervised manner. In some cases, such as in supervised training, the training data can be labeled to correlate each input in the training data to a desired output. Correlating each input to the desired output can enable the image processing module 224 to learn a mapping between the inputs and desired outputs, such as to detect whether a leak is present in the imaging data 212. In other cases, such as in unsupervised training, the training data can include inputs without desired outputs such that the image processing module 224 is trained to determine structure in the inputs on its own. In semi-supervised training, only some of the inputs in the training data are correlated to desired outputs.

The image processing module 224 may implement digital image processing or computer vision techniques to analyze the imaging data 212. For example, the image processing module can use image segmentation to partition a frame of the imaging data 212 into multiple image segments or multiple sets of pixels to locate or identify the leak in the imaging data 212. The image processing module 224 can extract one or more characteristics from the imaging data 212 to generate classification data 226, thereby transforming pixels of the frame into meaningful representations. In particular, each pixel of the frame being analyzed can be assigned a respective label such that a subset of pixels sharing the same label share certain characteristics. Examples of the characteristics can include brightness, color, texture, intensity, etc. Additionally, the characteristics extracted by the image processing module 224 can include absorption information (e.g., infrared absorption) of the chemical(s) in the leak. For example, the absorption information may be determined as a function of frequency or wavelength. In some cases, certain gases or pollutants may absorb infrared radiation such that a presence of these gases or pollutants can result in a decreased amount of radiation detected by the detector 208. Additionally, each chemical may have a respective absorption signature that can be used to distinguish or identify the chemical. Accordingly, using the classification data 226, the computing device 218 can determine the chemical composition as a parameter of the leak of the leaking element 204b.

Additionally or alternatively, the classification data 226 can be used to determine additional parameters of the leak. In some cases, image segmentation can be applied to the imaging data 212 for feature detection, such as to distinguish a gas plume of the leak from a background of certain frames of the imaging data 212. Examples of feature detection can include edge detection, blob detection, shape detection, etc. As an example, the image processing module 224 can identify a portion of a particular frame that corresponds to the gas plume based on the portion of the particular frame having a subset of pixels with the same or similar absorption information. There can be an abrupt change between the absorption information of the portion of the particular frame compared to a remaining portion of the particular frame, which can delineate where the gas plume is located in the particular frame of the imaging data 212. In some examples, the classification data 226 generated by the image processing module 224 can be used to determine a flow rate of the leak, such as based on changes in the gas plume between different frames captured in the imaging data 212.

In addition to locating the leak in the imaging data 212, the computing device 218 can execute the image processing module 224 to quantify the leak using the imaging data 212. For example, the imaging data 212 can include multiple frames of a particular field of view that were sequentially captured at different times. The image processing module 224 can determine differences between or among the frames that occurred within a time window during which the frames were captured by the leak detection unit 206. In particular, the image processing module 224 may analyze pixels of each frame to determine the differences to quantify the leak. Additionally, quantifying the leak may involve accounting for other factors, such as wind speed or weather conditions. In some cases, the quantification of the leak can result in a leak rate of the leak, such as a mass leak rate or a volumetric leak rate, at which the emissions are discharged from the leaking element 204b.

Additionally or alternatively, the computing device 218 may quantify the leak using information from the P&ID or other repositories related to the pieces of equipment in the industrial plant 100. For example, as indicated above, the P&ID can include information related to the inputs and outputs of a particular piece of equipment. This information can be collected over time such that the computing device 218 can determine an inlet flow rate and an outlet flow rate of the particular piece of equipment at certain points in time when the imaging data 212 was captured. In some examples, a mass balance or material balance can be applied using the information from the P&ID to quantify the emissions lost or released due to the leak.

Once the computing device 218 quantifies the leak, the computing device 218 can record the quantification of the leak associated with the leaking element 204b in an emissions database 228. In some examples, the emissions database 228 can be part of the database system 223, as shown in FIG. 2. The emissions database 228 can store one or more entries that quantify the emissions of each piece of equipment in the industrial plant 100. In some examples, the computing device 218 may generate an emissions value associated with each fluid handling element 204 prior to deploying the leak detection unit 206 for leak detection. As an example, the emissions value can be a quantification of the amount of emissions in terms of weight (e.g., kilograms). Once the emissions value is generated, the computing device 218 can record the emissions value in the emissions database 228. For example, the emissions value determined for the leaking element 204b can be recorded such that the emissions value can be identified in the emissions database 228 using the second identifier 222b associated with the leaking element 204b. This is one example of how the emissions value is thus identifiable in the emissions database 228 using the identifier associated with the leaking element 204b.

The emissions value can be an initial quantification (e.g., a baseline value) of the emissions released by the leaking element 204b that can be determined using a first emissions factor. For instance, the emissions value generated prior to deploying the leak detection unit 206 can be considered normal leakage. Emissions factors can be representative values that can relate a quantity of emissions released with an activity associated with the release of the emissions. In some cases, the emissions factors can be expressed as a weight of the emissions (e.g., a particular pollutant) divided by a unit weight, volume, distance, or duration of the activity emitting the emissions. As an example, the computing device 218 may estimate the emissions value using an equation that can involve multiplying a suitable emissions factor with a respective activity rate of each fluid handling element 204.

The emissions factors can vary based on a type of equipment, such that an emissions factor used to calculate the emissions value of a flange may be different from another emissions factor used to calculate the emissions value of a pump. Additionally, the emissions factors can vary depending on whether the emissions value is associated with leakage. For example, even if the first fluid handling element 204a and the leaking element 204b were the same type of equipment, different emissions factors may be used due to the leaking element 204b having the leak. Accordingly, the leak of the leaking element 204b can affect how its emissions are quantified. In some cases, an emissions factor associated with a non-leaking element may be lower than another emissions factor corresponding to the leaking element 204b.

Once the leak has been identified, the computing device 218 can generate an updated emissions value corresponding to the leaking element 204b. As an example, the computing device 218 can use a second emissions factor different from the first emissions factor to determine the updated emissions value. The second emissions factor can be selected based at least on the leak of the leaking element 204b being present. As another example, the computing device 218 can use a quantification of the leak. As described herein, the quantification of the leak can be a measured value or estimation determined by the computing device 218 or by the leak detection unit 206. The computing device 218 can record the updated emissions value in the emissions database 228 as an updated quantification of the emissions released by the leaking element 204b. In some cases, the emissions database 228 can facilitate recordkeeping by storing emissions data related to the industrial plant 100 that can be used to track which fluid handling elements have a leak. Certain fluid handling elements that have been detected to have a leak can be monitored more frequently or with greater priority compared to other fluid handling elements that are not currently leaking or have not leaked in the past. The emissions database 228 can be updated in real-time (e.g., substantially contemporaneously) or in batches.

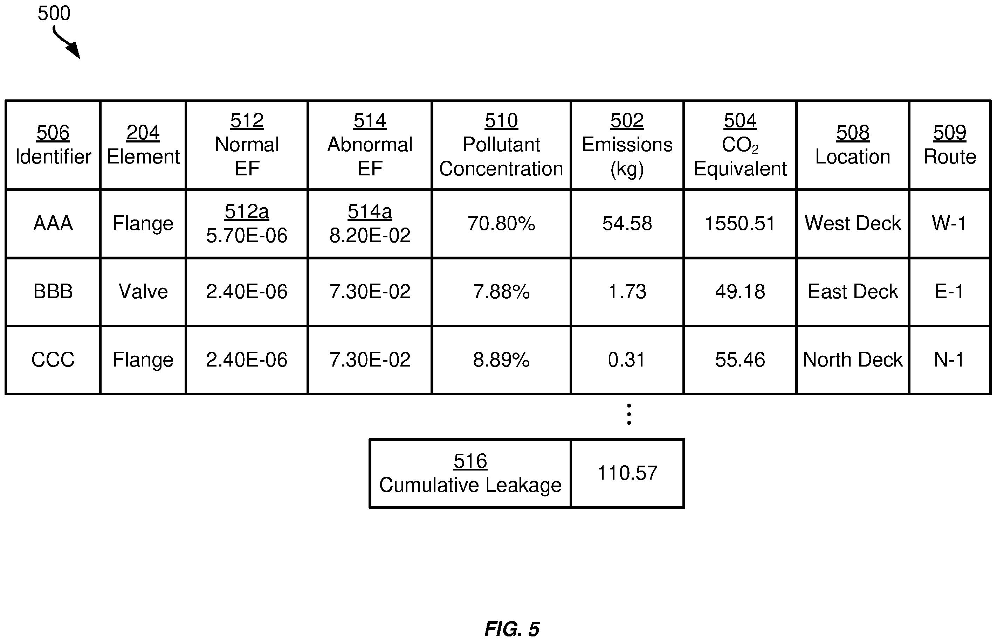

FIG. 5 is an example table 500 including emissions values 502 used to monitor gaseous emissions in an industrial plant 100 according to some examples of the present disclosure. As shown, the emissions values 502 are quantified in terms of mass, specifically kilograms of pollutant. In some instances, the emissions values 502 can be quantified as a function of time, such as an amount of emissions over a predefined time window (e.g., a week, a month, a calendar year, etc.). The table 500 additionally can include carbon dioxide (CO₂) equivalents 504 of the emissions values 502. A computing device 218 may determine the CO₂ equivalents 504 after calculating the emissions values 502. The CO₂ equivalents 504 can indicate an amount of CO₂ emissions with the same global warming potential as the emissions values 502. Accordingly, the CO₂ equivalents 504 can be used as a measurement standard to standardize a comparison of the emissions values 502 from various pollutants (e.g., greenhouse gases, volatile organic compounds (VOCs), etc.). Although the emissions values 502 are provided as part of the table 500 in FIG. 5, it should be recognized that other formats (e.g., a spreadsheet, chart, text file, etc.) for providing the emissions values 502 are possible. Certain aspects of FIG. 5 are described with reference to components of FIGS. 1 and 2.

As shown in FIG. 5, the table 500 can include identifiers 506 corresponding to respective fluid handling elements 204 of the industrial plant 100. In some examples, the identifiers 506 can be a sequence of characters, which can include alphanumeric characters, symbols, etc. The identifiers 506 can correspond to or be the same as identifiers used in other repositories related to the industrial plant 100, such as a piping and instrumentation diagram (P&ID). Using the identifiers 506, a computing device 218 can record the emissions values 502 in the emissions database 228 to correspond to the respective fluid handling elements 204. The table 500 additionally can include a respective location 508 of each fluid handling element 204. The locations 508 can correspond to a physical location or geolocation (e.g., longitudinal coordinates, latitudinal coordinates, altitude, etc.) of the fluid handling elements 204 in the industrial plant 100. In some examples, the table 500 can include a respective route indicator 509 associated with each fluid handling element 204, which can correspond to a route or a predefined flight plan executed by a leak detection unit 206 to monitor the fluid handling elements 204.

In some implementations, the emissions values 502 shown can be part of the emissions database 228 of FIG. 2. In particular, calculation of the emissions values 502 can be integrated with the emissions database 228. The table 500 can include measurements associated with each type of pollutant in emissions from the respective fluid handling elements 204. For example, as shown, the table 500 includes pollutant concentrations 510 for the emissions released by the fluid handling elements 204. The pollutant concentrations 510 or other information associated with the pollutants in the emissions can be used with emissions factors to determine the emissions values 502. In some examples, a particular emissions factor that is applied to determine the emission values 502 can vary based on a type of the emissions. In particular, the emissions released by the fluid handling elements 204 can be categorized as normal leakage or abnormal leakage. As an example, a different emissions factor can be multiplied with an activity rate or emissions rate of a fluid handling element 204 based on whether the fluid handling element 204 has a leak. In some cases, normal leakage can include emissions released through intentional venting that may occur through equipment design or operational practices. For example, a pressure-relief valve may be designed to vent to atmosphere when a predefined pressure threshold is exceeded. In contrast, abnormal emissions, such as fugitive emission, are typically unintentional and may be difficult to account for or quantify without monitoring by the leak detection unit 206. In some examples, abnormal emissions may be identified based on the pollutant concentrations 510 exceeding a predefined threshold (e.g., a leak definition).

As shown, the table 500 may include a first set of emissions factors 512 corresponding to normal leakage and a second set of emissions factors 514 corresponding to abnormal leakage. In some examples in which a leak is detected in a particular fluid handling element, a suitable emissions factor may be selected from the second set of emissions factors 514 to determine a corresponding emissions value related to the particular fluid handling element. In some cases, the table 500 can include additional emissions factors, such as averaged emissions factors or average emissions factors corresponding to a particular type of equipment (e.g., valve, flange, etc.).

As discussed above with respect to FIG. 2, the computing device 218 may generate an initial emissions value for each fluid handling element 204 prior to deploying the leak detection unit 206. Once the leak detection unit 206 detects a leak, the computing device 218 can automatically adjust a calculation of a particular emissions value corresponding to a leaking element 204b. In particular, the computing device 218 can modify the calculation to switch from a first emissions factor 512a included in the first set of emissions factors 512 to a second emissions factor 514a associated with the second set of emissions factors 514. The second emissions factor 514a then can be used to generate an updated emissions value to replace the existing or initial emissions value calculated using the first emissions factor 512a. In some cases, the computing device 218 may determine the updated emissions value. In other cases, the emissions database 228 may automatically update a calculation used to determine the existing emissions value to use the second emissions factor 514a to calculate the updated emissions value. After the leak is resolved, the computing device 218 can automatically revert the calculation of the particular emissions value to use the first emissions factor 512a. Automatically adjusting which emissions factor is used to calculate the emissions values 502 can result in more accurate estimations or calculations compared to manual adjustments.

In some examples, the emissions database 228 can include a cumulative leak quantification 516 that can provide an aggregated amount of emissions released by the fluid handling elements 204 of the industrial plant 100 due to abnormal leakage. Changes to the emissions values 502 can affect the cumulative leak quantification 516 of the industrial plant 100. For example, the cumulative leak quantification 516 can account for or include each emissions value provided in the emissions database 228 that is calculated using the second set of emission factors 514. Once a particular emissions value is updated or modified using the second set of emissions factors 514, the cumulative leak quantification 516 can also be updated to reflect the updated emissions value. In other words, the cumulative leak quantification 516 can omit emissions that are unrelated to abnormal leakage or fugitive emissions, such as emissions due to a controlled gas release to reduce pressure.

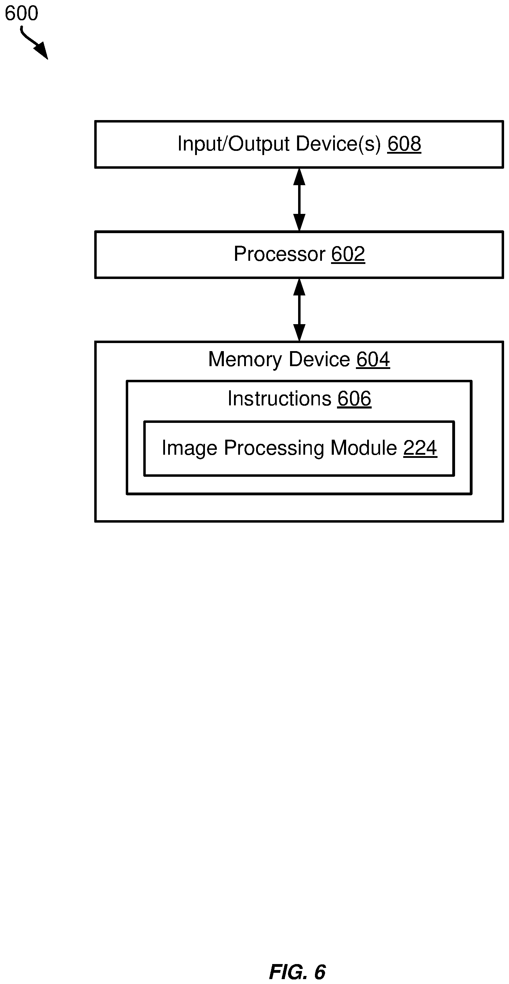

FIG. 6 is a block diagram of an example computing device 600 used to automatically monitor gaseous emissions in an industrial plant according to some examples of the present disclosure. While FIG. 6 shows the computing device 600 as including certain components, other examples may involve more, fewer, or different components than are shown in FIG. 6. In some cases, the computing device 218 of FIG. 2 can correspond to the computing device 600 of FIG. 6. The computing device 600 may be in communication with one or more leak detection units, such as the leak detection unit 206 of FIG. 2, that may be configured to detect leaks in pieces of equipment of the industrial plant. The computing device 600 is shown to include a processor 602 that can be communicatively coupled to a memory 604. The processor 602 can include one processor or multiple processors. Non-limiting examples of the processor 602 include a Field-Programmable Gate Array (FPGA), an application specific integrated circuit (ASIC), a microprocessor, or any combination of these. Instructions 606 may be stored in the memory 604. Output generated by the processor 602 can be presented via various mediums, including on a display device or another suitable output device that is communicatively coupled to the processor 602.

The instructions 606 are executable by the processor 602 for causing the processor 602 to perform various operations. In some examples, the instructions 606 executable by the processor 602 can include processor specific instructions generated by a compiler or an interpreter from code written in any suitable computer-programming language, such as C, C++, C#, Java, or Python. Through the instructions 606, the processor 602 may operate as described above to perform the various operations of the computing device 600 related to automatically monitoring the gaseous emissions of the industrial plant.

The memory 604 can include one memory device or multiple memory devices. The memory 604 can be non-volatile and may include any type of memory device that retains stored information when powered off. Non-limiting examples of the memory 604 include electrically erasable and programmable read-only memory (EEPROM), flash memory, or any other type of non-volatile memory. At least some of the memory device includes a non-transitory computer-readable medium from which the processor 602 can read the instructions 606. A non-transitory computer-readable medium can include electronic, optical, magnetic, or other storage devices capable of providing the processor 602 the instructions 606 or other program code. The instructions 606 stored thereon the non-transitory computer-readable medium can be executable by the processor 602 to cause the computing device 600 to perform one or more processes. As shown in FIG. 6, the memory may also include an image processing module (e.g., the image processing module 224 of FIG. 2) in some examples. Non-limiting examples of a non-transitory computer-readable medium include magnetic disk(s), memory chip(s), ROM, random-access memory (RAM), an ASIC, a configured processor, optical storage, or any other medium from which a computer processor can read the instructions 606.

The computing device 600 can additionally include one or more input/output devices 608 that can be communicatively coupled to the processor 602. Emissions data, equipment status (e.g., with respect to leakage), and various other information relating to system operations can be presented to an operator, such as part of a user interface on an output device of the computing device 600. Examples of the input/output devices 608 can include a keyboard, a touchscreen, a pointing device, a display, or other suitable computer input/output devices. Additionally, the computing device 600 can include a communication interface. Thus, the computing device 600 can receive, via the communication interface, inputs in the form of imaging data or location data from the leak detection unit. Likewise, the computing device 600 can transmit, via the communication interface, control signals to control an operation of the leak detection unit, such as in a manner previously described above.

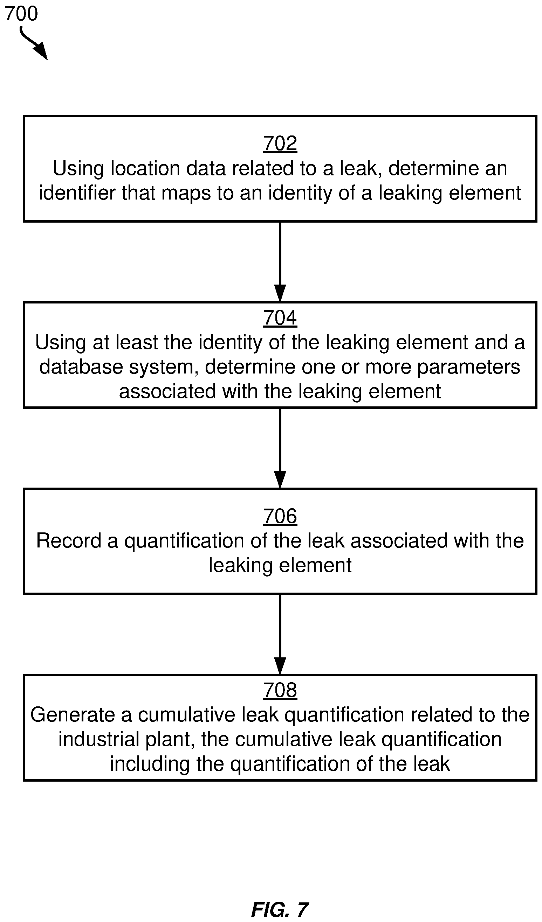

FIG. 7 is a flowchart of a process 700 for automatically monitoring gaseous emissions in an industrial plant according to some examples of the present disclosure. In some examples, a computing device 218 can perform one or more of the steps shown in FIG. 7. In other examples, the computing device 218 can implement more steps, fewer steps, different steps, or a different order of the steps depicted in FIG. 7. The steps of FIG. 7 are described below with reference to components discussed above in FIGS. 1, 2 and 5.

At block 702, using location data 216 related to a leak, the computing device 218 determines an identifier 506 that maps to an identity of a leaking element 204b such that the leaking element 204b is identifiable in the database system 223. The leaking element 204b can be part of an industrial plant 100. The computing device 218 can receive the location data 216 from a leak detection unit 206 that can identify the leak using a detector 208. In some examples, the location data 216 can include one or more coordinates of the leak detection unit 206 when the detector 208 identified the leak. The computing device 218 can use information related to the leak detection unit 206 together with the location data 216 to determine an equipment location of the leaking element 204b. For example, the computing device 218 may use a detection range of the detector 208 or imaging data 212 captured by the leak detection unit 206 to determine or confirm the equipment location of the leaking element 204b.

After determining the equipment location of the leaking element 204b, the computing device 218 then can determine the identifier 506 corresponding to the leaking element 204b. For example, the computing device 218 may access equipment data that can map each piece of equipment in the industrial plant 100 to a respective physical location (e.g., represented by a coordinate tuple) in the industrial plant 100. Additionally, each piece of equipment can be assigned a respective identifier that can be used to identify and track a corresponding piece of equipment. Based on the equipment location determined using the location data 216, the computing device 218 can determine the identifier 506 corresponding to the leaking element 204b.

At block 704, using at least the identity of the leaking element 204b and the database system 223, the computing device 218 determines one or more parameters of the leak associated with the leaking element 204b. The parameters can include a quantification of the leak. For example, the computing device 218 can transmit communication to the database system 223 including the identifier 506 to obtain information related to the leaking element 204b. The information can relate to fluid handled or transported through the leaking element 204b (e.g., fluid flow rate, fluid temperature, fluid pressure, etc.) or relate to the leaking element 204b (e.g., equipment location in the industrial plant 100, maintenance schedule, etc.).

Additionally or alternatively, the parameters can include a chemical composition of the leak. As previously discussed with respect to FIG. 2, in some examples, the computing device 218 can analyze the imaging data 212 received from the leak detection unit 206 to determine the chemical composition of the leak. For example, the imaging data 212 can include absorption data that can be analyzed to determine specific chemicals present in the leak. The computing device 218 can determine a respective quantification per each type of pollutant in the leak based on the chemical composition determined using the imaging data 212. The computing device 218 may also use the imaging data 212 to estimate an amount of emissions released via the leak. Additionally or alternatively, the computing device 218 can use the identifier 506 associated with the leaking element 204b to obtain additional information related to the leaking element 204b to quantify the leak. For instance, using the identifier 506 and the database system 223, the computing device 218 can determine a flow rate and composition of inputs and outputs associated with the leaking element 204b.

At block 706, the computing device 218 records the quantification of the leak associated with the leaking element 204b. In some examples, the computing device 218 can record the quantification of the leak in an emissions database 228 such that overall emissions of the industrial plant 100 can be aggregated and tracked over time. For example, after calculating or estimating the quantification of the leak, the computing device 218 can transmit communication to the emissions database 228 including the quantification to record the quantification in the emissions database 228. The communication provided by the computing device 218 to the emissions database 228 may include the identifier 506 of the leaking element 204b such that the quantification of the leak is attributed to the leaking element 204b in the emissions database 228. The quantification of the leak can replace an existing baseline emissions value in the emissions database 228 that was calculated based on a non-leaking version of the leaking element 204b.

At block 708, the computing device 218 generates a cumulative leak quantification 516 related to the industrial plant 100. The cumulative leak quantification 516 can an aggregated value related to leaked emissions associated with the industrial plant 100. The cumulative leak quantification 516 can include the quantification of the leak. In some examples, the computing device 218 can use the emissions database 228 to generate or store the cumulative leak quantification 516. For example, the computing device 218 may communicate with the emission database 228 (e.g., using a message or a retrieval request) to obtain a respective quantification related to each leaking element in the industrial plant 100. Additionally or alternatively, in some examples, the computing device 218 can process emissions data, such as data received from the emission database 228, to generate a subset of the emissions data that is related to abnormal leakage. For example, processing the emissions data can involve removing data entries related to emissions generated by normal leakage or controlled release to generate the subset of the emissions data associated with abnormal leakage. In some implementations, in response to an update to the emission database 228 or other emissions data, the computing device 218 can update the cumulative leak quantification 516 to reflect the update. For example, if the leak of the leaking element 204b worsens (e.g., increases in emission rate), the quantification of the leak may be updated to reflect an increase in emissions or leakage. The computing device 218 can update the cumulative leak quantification 516 to account for the increase in emissions of the leaking element 204b.

The foregoing description of certain examples, including illustrated examples, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure.

## Claims

1. A gas leak recordation system comprising:
(a) a gas leak detection unit, the gas leak detection unit comprising a detector and a transmitter, the detector configured to quantify a leak from a leaking element, wherein the leaking element is one of a plurality of fluid handling elements of an industrial plant, the transmitter configured to output location data related to the leak; and
(b) a database system storing configuration data related to the plurality of fluid handling elements, the configuration data comprising a respective fluid composition handled by each fluid handling element;
(c) a computing device in communication with the gas leak detection unit and the database system, the computing device comprising:
(i) a processor; and
(ii) a non-transitory computer-readable medium having instructions stored thereon that are executable by the processor to cause the computing device to:
using the location data related to the leak, determine an identifier that maps to an identity of the leaking element such that the leaking element is identifiable in the database system;
using at least the identity of the leaking element and the database system, determining one or more parameters of the leak associated with the leaking element, the one or more parameters comprising a quantification of the leak;
record the quantification of the leak associated with the leaking element; and
generate a cumulative leak quantification related to the industrial plant, the cumulative leak quantification comprising the quantification of the leak;
optionally, wherein the detector of the gas leak detection unit comprises an imaging device configured to obtain imaging data usable to detect the leak.

2. The gas leak recordation system of claim 1, wherein the non-transitory computer-readable medium further includes instructions executable by the processor for causing the processor to:
generate an emissions value associated with the leaking element prior to deploying the gas leak detection unit, wherein the emissions value is an initial quantification of gaseous emissions released by the leaking element that is determined using a first emissions factor;
record the emissions value in an emissions database that stores a plurality of entries that quantifies emissions released by the plurality of fluid handling elements of the industrial plant, wherein the emissions value is identifiable in the emissions database using the identifier associated with the leaking element;
subsequent to quantifying the leak, generate an updated emissions value using a second emissions factor selected based at least on the leak of the leaking element or using the quantification of the leak; and
record the updated emissions value in the emissions database as an updated quantification of the gaseous emissions released by the leaking element.

3. The gas leak recordation system of claim 1, wherein the gas leak detection unit is an unmanned device configured to be deployed to monitor at least a portion of the plurality of fluid handling elements of the industrial plant.

4. The gas leak recordation system of claim 3, wherein the gas leak detection unit is configured to:
determine the location data related to the leak based on a physical location of the gas leak detection unit when detecting the leak; and
transmit the location data to the computing device.

5. The gas leak recordation system of claim 3, wherein the unmanned device is configured to be deployed using a predefined flight plan or remote operation by an operator, and wherein the predefined flight plan comprises one or more waypoints at which the unmanned device is configured to obtain imaging data related to at least one of the plurality of fluid handling elements; optionally, wherein the unmanned device is configured to automatically determine at least a portion of the predefined flight plan based on historical data related to one or more historical flight plans or related to a set of historical leaking elements of the plurality of fluid handling elements.

6. The gas leak recordation system of claim 1, wherein the computing device further comprises an image processing module to:
receive imaging data from the gas leak detection unit;
extract characteristics from the imaging data to generate classification data related to the leak, wherein the classification data comprises information related to one or more chemicals in the leak; and
using the classification data, determine at least one parameter of the one or more parameters, wherein the at least one parameter comprises a chemical composition of the leak of the leaking element or a flow rate of the leak.

7. A method comprising:
receiving location data from a transmitter of a gas leak detection unit comprising a detector that has detected a leak from a leaking element, the leaking element being one of a plurality of fluid handling elements of an industrial plant;
using the location data related to the leak, determining an identifier that maps to an identity of the leaking element such that the leaking element is identifiable in a database system, the database system storing configuration data related to the plurality of fluid handling elements and comprising a respective fluid composition handled by each fluid handling element;
using the identity of the leaking element and the database system, determining one or more parameters of the leak associated with the leaking element, the one or more parameters comprising a quantification of the leak;
recording the quantification of the leak associated with the leaking element; and
generating a cumulative leak quantification related to the industrial plant, the cumulative leak quantification comprising the quantification of the leak.

8. The method of claim 7, further comprising:
generating an emissions value associated with the leaking element prior to deploying the gas leak detection unit, wherein the emissions value is an initial quantification of gaseous emissions released by the leaking element that is determined using a first emissions factor
recording the emissions value in an emissions database that stores a plurality of entries that quantifies emissions released by the plurality of fluid handling elements of the industrial plant, wherein the emissions value is identifiable in the emissions database using the identifier associated with the leaking element;
subsequent to quantifying the leak, generating an updated emissions value using a second emissions factor selected based at least on the leak of the leaking element or using the quantification of the leak; and
recording the updated emissions value in the emissions database as an updated quantification of the gaseous emissions released by the leaking element.

9. The method of claim 7, wherein the gas leak detection unit is an unmanned device deployed to monitor at least a portion of the plurality of fluid handling elements of the industrial plant.

10. The method of claim 9, wherein the gas leak detection unit determines the location data related to the leak based on a physical location of the gas leak detection unit when detecting the leak.

11. The method of claim 9, wherein detecting the leak of the leaking element comprises:
deploying the unmanned device using a predefined flight plan or remote operation by an operator, wherein the predefined flight plan comprises one or more waypoints at which the unmanned device obtains imaging data related to at least one of the plurality of fluid handling elements; optionally, wherein the unmanned device automatically determines at least a portion of the predefined flight plan based on historical data related to one or more historical flight plans or related to a set of historical leaking elements of the plurality of fluid handling elements.

12. The method of claim 7, wherein the detector of the gas leak detection unit comprises an imaging device that obtains imaging data usable to detect the leak.

13. The method of claim 7, further comprising:
receiving imaging data from the gas leak detection unit;
extracting characteristics from the imaging data to generate classification data related to the leak, wherein the classification data comprises information related to one or more chemicals in the leak; and
using the classification data, determining a chemical composition of the leak of the leaking element.

14. A non-transitory computer-readable medium comprising instructions that are executable by a processor for causing the processor to perform operations comprising:
receiving location data from a transmitter of a gas leak detection unit comprising a detector that has detected a leak from a leaking element, the leaking element being one of a plurality of fluid handling elements of an industrial plant;
using the location data related to the leak, determining an identifier that maps to an identity of the leaking element such that the leaking element is identifiable in a database system, the database system storing configuration data related to the plurality of fluid handling elements and comprising a respective fluid composition handled by each fluid handling element;
using the identity of the leaking element and the database system, determining one or more parameters of the leak associated with the leaking element, the one or more parameters comprising a quantification of the leak;
recording the quantification of the leak associated with the leaking element; and
generating a cumulative leak quantification related to the industrial plant, the cumulative leak quantification comprising the quantification of the leak; optionally, wherein the operations further comprise:
generate an emissions value associated with the leaking element prior to deploying the gas leak detection unit, wherein the emissions value is an initial quantification of gaseous emissions released by the leaking element that is determined using a first emissions factor;
record the emissions value in an emissions database that stores a plurality of entries that quantifies emissions released by the plurality of fluid handling elements of the industrial plant, wherein the emissions value is identifiable in the emissions database using the identifier associated with the leaking element;
subsequent to quantifying the leak, generate an updated emissions value using a second emissions factor selected based at least on the leak of the leaking element or using the quantification of the leak; and
record the updated emissions value in the emissions database as an updated quantification of the gaseous emissions released by the leaking element.

15. The non-transitory computer-readable medium of claim 14, wherein the gas leak detection unit is an unmanned device deployed to monitor at least a portion of the plurality of fluid handling elements of the industrial plant; optionally, wherein the unmanned device is deployed using a predefined flight plan or remote operation by an operator, and wherein the predefined flight plan comprises one or more waypoints at which the unmanned device obtains imaging data related to at least one of the plurality of fluid handling elements.

## Amended claims

### Amended claims in accordance with Rule 137(2) EPC.

1. A gas leak recordation system (200) comprising:
(a) a gas leak detection unit (206), the gas leak detection unit comprising a detector (208) and a transmitter (220), the detector configured to quantify a leak from a leaking element, wherein the leaking element is one of a plurality of fluid handling elements (204a, 204b) of an industrial plant (100), the transmitter configured to output location data (216) related to the leak; and
(b) a database system (223) storing configuration data (225) related to the plurality of fluid handling elements, the configuration data comprising a respective fluid composition handled by each fluid handling element;
(c) a computing device (218) in communication with the gas leak detection unit and the database system, the computing device comprising:
(i) a processor; and
(ii) a non-transitory computer-readable medium having instructions stored thereon that are executable by the processor to cause the computing device to:
using the location data related to the leak, determine an identifier (222a, 222b) that maps to an identity of the leaking element such that the leaking element is identifiable in the database system;
using at least the identity of the leaking element and the database system, determining one or more parameters of the leak associated with the leaking element, the one or more parameters comprising a quantification of the leak;
record the quantification of the leak associated with the leaking element; and
generate a cumulative leak quantification related to the industrial plant, the cumulative leak quantification comprising the quantification of the leak;
optionally, wherein the detector of the gas leak detection unit comprises an imaging device (210) configured to obtain imaging data usable to detect the leak.

2. The gas leak recordation system (200) of claim 1, wherein the non-transitory computer-readable medium further includes instructions executable by the processor for causing the processor to:
generate an emissions value associated with the leaking element prior to deploying the gas leak detection unit, wherein the emissions value is an initial quantification of gaseous emissions released by the leaking element that is determined using a first emissions factor;
record the emissions value in an emissions database (228) that stores a plurality of entries that quantifies emissions released by the plurality of fluid handling elements (204a, 204b) of the industrial plant (100), wherein the emissions value is identifiable in the emissions database using the identifier associated with the leaking element;
subsequent to quantifying the leak, generate an updated emissions value using a second emissions factor selected based at least on the leak of the leaking element or using the quantification of the leak; and
record the updated emissions value in the emissions database as an updated quantification of the gaseous emissions released by the leaking element.

3. The gas leak recordation system (200) of claim 1, wherein the gas leak detection unit (206) is an unmanned device (300) configured to be deployed to monitor at least a portion of the plurality of fluid handling elements (204a, 204b) of the industrial plant (100).

4. The gas leak recordation system (200) of claim 3, wherein the gas leak detection unit is configured to:
determine the location data related to the leak based on a physical location of the gas leak detection unit when detecting the leak; and
transmit the location data to the computing device.

5. The gas leak recordation system (200) of claim 3, wherein the unmanned device is configured to be deployed using a predefined flight plan or remote operation by an operator, and wherein the predefined flight plan comprises one or more waypoints at which the unmanned device is configured to obtain imaging data related to at least one of the plurality of fluid handling elements (204a, 204b); optionally, wherein the unmanned device is configured to automatically determine at least a portion of the predefined flight plan based on historical data related to one or more historical flight plans or related to a set of historical leaking elements of the plurality of fluid handling elements (204a, 204b).

6. The gas leak recordation system (200) of claim 1, wherein the computing device further comprises an image processing module to:
receive imaging data from the gas leak detection unit;
extract characteristics from the imaging data to generate classification data related to the leak, wherein the classification data comprises information related to one or more chemicals in the leak; and
using the classification data, determine at least one parameter of the one or more parameters, wherein the at least one parameter comprises a chemical composition of the leak of the leaking element or a flow rate of the leak.

7. A method (700) comprising:
receiving location data from a transmitter of a gas leak detection unit comprising a detector that has detected a leak from a leaking element, the leaking element being one of a plurality of fluid handling elements of an industrial plant;
using (702) the location data related to the leak, determining an identifier that maps to an identity of the leaking element such that the leaking element is identifiable in a database system, the database system storing configuration data related to the plurality of fluid handling elements and comprising a respective fluid composition handled by each fluid handling element;
using (704) the identity of the leaking element and the database system, determining one or more parameters of the leak associated with the leaking element, the one or more parameters comprising a quantification of the leak;
recording (706) the quantification of the leak associated with the leaking element; and
generating (708) a cumulative leak quantification related to the industrial plant, the cumulative leak quantification comprising the quantification of the leak.

8. The method (700) of claim 7, further comprising:
generating an emissions value associated with the leaking element prior to deploying the gas leak detection unit, wherein the emissions value is an initial quantification of gaseous emissions released by the leaking element that is determined using a first emissions factor;
recording the emissions value in an emissions database that stores a plurality of entries that quantifies emissions released by the plurality of fluid handling elements of the industrial plant, wherein the emissions value is identifiable in the emissions database using the identifier associated with the leaking element;
subsequent to quantifying the leak, generating an updated emissions value using a second emissions factor selected based at least on the leak of the leaking element or using the quantification of the leak; and
recording the updated emissions value in the emissions database as an updated quantification of the gaseous emissions released by the leaking element.

9. The method (700) of claim 7, wherein the gas leak detection unit is an unmanned device deployed to monitor at least a portion of the plurality of fluid handling elements of the industrial plant.

10. The method (700) of claim 9, wherein the gas leak detection unit determines the location data related to the leak based on a physical location of the gas leak detection unit when detecting the leak.

11. The method (700) of claim 9, wherein detecting the leak of the leaking element comprises:
deploying the unmanned device using a predefined flight plan or remote operation by an operator, wherein the predefined flight plan comprises one or more waypoints at which the unmanned device obtains imaging data related to at least one of the plurality of fluid handling elements; optionally, wherein the unmanned device automatically determines at least a portion of the predefined flight plan based on historical data related to one or more historical flight plans or related to a set of historical leaking elements of the plurality of fluid handling elements.

12. The method (700) of claim 7, wherein the detector of the gas leak detection unit comprises an imaging device that obtains imaging data usable to detect the leak.

13. The method (700) of claim 7, further comprising:
receiving imaging data from the gas leak detection unit;
extracting characteristics from the imaging data to generate classification data related to the leak, wherein the classification data comprises information related to one or more chemicals in the leak; and
using the classification data, determining a chemical composition of the leak of the leaking element.

14. A non-transitory computer-readable medium comprising instructions that are executable by a processor for causing the processor to perform the method of any of claims 7 to 13.
